# FASCICULE DE BREVET EUROPEEN

(11) **EP 3 114 324 B1**
(45) Date de publication et mention de la délivrance du brevet: **02.05.2018**
(21) Numéro de dépôt: 15714556.6
(22) Date de dépôt: 03.03.2015
(51) Int. Cl.: F01D 25/00, F01D 9/04

(54) **SECTEUR DE STATOR POUR TURBOMACHINE ET SON PROCEDE DE FABRICATION**
STATORABSCHNITT FÜR EINE TURBOMASCHINE UND VERFAHREN ZUR HERSTELLUNG DAVON
STATOR SECTION FOR A TURBOMACHINE AND METHOD FOR PRODUCING THE SAME

(30) Priorité: 06.03.2014 FR 1451824
(43) Date de publication de la demande: 11.01.2017
(73) Titulaire: SAFRAN AIRCRAFT ENGINES, 75015 Paris (FR)
(72) Inventeur: FREMONT, Eric, 94430 Chennevieres sur Marne (FR)
(74) Mandataire: Desormiere, Pierre-Louis
(86) Numéro de dépôt international: PCT/FR2015/050512
(87) Numéro de publication internationale: WO 2015/132523

(56) Documents cités:
- EP-A2- 1 626 163
- EP-A2- 1 905 956
- WO-A1-2010/061140
- WO-A1-2010/116066

## Description

### Arrière-plan de l'invention

L'invention concerne les stators de turbomachine. Le domaine visé est celui des compresseurs ou redresseurs de turbines à gaz pour moteurs aéronautiques ou turbines industrielles

L'amélioration des performances des turbomachines et la réduction de leurs émissions polluantes conduisent à envisager des températures de fonctionnement de plus en plus élevées. Pour des éléments de parties chaudes de turbomachines, il a donc été proposé d'utiliser des matériaux composites à matrice céramique (CMC). En effet, ces matériaux possèdent des propriétés thermostructurales remarquables, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Ainsi, les documents WO 2010/061140, WO 2010/116066 et WO 2011/080443 décrivent la réalisation d'aubes de roues mobiles de turbomachines en CMC à plate-forme et talon intégrés. L'utilisation de matériaux CMC pour des distributeurs de turbine a aussi été proposée, notamment dans le document WO 2010/146288.

Un distributeur de turbine ou redresseur de compresseur métallique traditionnel est formé de plusieurs secteurs assemblés, chaque secteur comprenant une plate-forme interne, une plate-forme externe et une pluralité de pales s'étendant entre les plates-formes interne et externe et solidaires de celles-ci. Les plates-formes interne et externe délimitent la veine d'écoulement de gaz ou d'air dans le distributeur ou redresseur. Du côté externe, les plates-formes externes des secteurs sont solidaires de pattes permettant le montage du distributeur de turbine ou redresseur de compresseur dans un carter.

Le document EP 1 213 484 décrit un étage redresseur de compresseur en matériau métallique réalisé par assemblage de pales entre une virole interne et une virole externe, les extrémités interne et externe des pales étant solidarisées respectivement à la virole interne et à la virole externe par une lame unique. Dans ce cas, le verrouillage des pales vis-à-vis des plateformes interne et externe au moyen d'une lame continue pose des problèmes d'alignement entre les pales. En effet, une telle solution de verrouillage nécessite de ménager un jeu important entre les pales pour permettre leur alignement vis-à-vis de la lame. Un tel jeu est inacceptable dans le cas d'un redresseur ou distributeur basse pression car il entraîne des fuites et des pertes de charge trop importantes dans le moteur.

Le document EP 1 626 163 décrit un redresseur de compresseur en matériau métallique comportant des pales assemblées entre une virole interne et une virole externe, un jeu important étant notamment ménagé entre les lumières de la virole interne et les extrémités internes des pales. De même que pour le document EP 1 213 484, un tel jeu ne peut pas être toléré au niveau de la définition de la veine interne car il entraîne des fuites trop importantes dans le moteur. Le document EP 1 905 956 décrit un procédé de réalisation d'un secteur de stator en matériau composite de turbomachine.

### Objet et résumé de l'invention

L'invention a pour but de proposer un procédé permettant de fabriquer un secteur de stator, en particulier de distributeur de turbine ou redresseur de compresseur, en matériau composite reprenant les différentes fonctions d'un secteur métallique, notamment les fonctions de délimitation de veine d'écoulement de gaz ou d'air par des plates-formes interne et externe et d'accrochage dans un carter. L'invention a encore pour but de permettre une réalisation simplifiée d'un tel secteur de stator par assemblage d'éléments élémentaires, et ce sans générer de fuites au niveau des portions d'assemblage entre les pales et les plateformes.

Ce but est atteint grâce à un procédé de fabrication d'un secteur de stator de turbomachine comprenant :
- la réalisation d'une pluralité d'ébauches fibreuses de pale en une seule pièce,
- la mise en forme des ébauches fibreuses pour obtenir des préformes fibreuses de pale en une seule pièce,
- la densification des préformes de pale par une matrice pour obtenir des pales en matériau composite ayant chacune un renfort fibreux constitué par la préforme et densifié par la matrice,
- l'usinage de chaque pale pour former une première extrémité et une deuxième extrémité délimitant entre elles un corps de pale, chaque première extrémité présentant des dimensions inférieures à celles du corps de pale de manière à définir un épaulement s'étendant autour de la première extrémité,
- la réalisation d'une lumière ou encoche dans les première et deuxième extrémités des pales,
- la réalisation d'une ébauche fibreuse d'une première plateforme et d'une ébauche fibreuse d'une deuxième plateforme,
- la mise en forme des ébauches fibreuses pour obtenir une préforme fibreuse de première plateforme en une seule pièce en forme d'arc de cercle et une préforme fibreuse de deuxième plateforme en une seule pièce en forme d'arc de cercle,
- la densification des préformes des première et deuxième plateformes par une matrice pour obtenir des première et deuxième plateformes en matériau composite en forme d'arc de cercle ayant un renfort fibreux constitué par la préforme et densifié par la matrice,
- la réalisation d'ouvertures dans les première et deuxième plateformes, les ouvertures de la première plateforme présentant des dimensions supérieures aux dimensions des premières extrémités des pales, l'épaulement s'étendant autour de la première extrémité présentant des dimensions supérieures aux dimensions des ouvertures de la première plateforme,
- engagement des deuxièmes extrémités des pales dans les ouvertures de la deuxième plateforme,
- placement d'un élément de verrouillage dans chaque lumière ou encoche des deuxièmes extrémités des pales,
- engagement des premières extrémités des pales dans les ouvertures de la première plateforme,
- placement d'un élément de verrouillage dans chaque lumière ou encoche des premières extrémités des pales.

Ainsi en réalisant des ouvertures dans la première plateforme présentant des dimensions supérieures aux dimensions des premières extrémités des pales et en réalisant un épaulement s'étendant autour de la première extrémité présentant des dimensions supérieures aux dimensions des ouvertures de la première plateforme, il est possible de ménager un jeu entre les extrémités internes des pales et les ouvertures de la plateforme interne afin de faciliter leur assemblage. En effet, les deuxièmes extrémités des pales étant déjà engagées et solidarisées dans les ouvertures de la deuxième plateforme ayant une forme d'arc de cercle, il n'est donc pas possible d'engager les premières extrémités des pales dans les ouvertures de la première plateforme si ces dernières n'ont pas des dimensions permettant de ménager un jeu avec les premières extrémités des pales. En revanche, puisque les premières extrémités des pales sont entourées d'un épaulement ayant des dimensions supérieures à celles des ouvertures de la première préforme, l'épaulement permet de masquer pour la veine le jeu présent entre les premières extrémités et les ouvertures de la première plateforme et assurer ainsi une étanchéité du stator au niveau de la définition interne de la veine.

Par ailleurs, le choix de ménager un jeu pour faciliter l'assemblage des pales avec les plateformes permet de fabriquer en série les pales suivant un même modèle et, par conséquent, de réduire le nombre de pièces différentes nécessaires à la réalisation d'un secteur de stator. Le temps et le coût de fabrication d'un tel secteur de stator sont ainsi réduits.

Selon une caractéristique particulière du procédé de l'invention, les pales, la première plateforme, la deuxième plateforme et les éléments de verrouillage sont réalisés en matériau composite à matrice céramique (CMC).

L'invention a également pour objet un secteur de stator de turbine comprenant une pluralité de pales en matériau composite comprenant un renfort fibreux densifié par une matrice, chaque pale comprenant un corps de pale s'étendant entre une première extrémité et une deuxième extrémité, ledit secteur comprenant en outre une première plateforme et une deuxième plateforme en forme d'arc de cercle en matériau composite comprenant un renfort fibreux densifié par une matrice, la première plateforme comprenant des ouvertures dans lesquelles sont engagées les premières extrémités de pales et la deuxième plateforme comprenant des ouvertures dans lesquelles sont engagées les deuxièmes extrémités de pales, caractérisé en ce que les ouvertures de la première plateforme présentent des dimensions supérieures aux dimensions des premières extrémités des pales engagées dans lesdites ouvertures de manière à ménager un jeu entre la première extrémité de chaque pale et l'ouverture et en ce que chaque première extrémité de pale engagée dans ladite ouverture présente des dimensions inférieures aux dimensions du corps de pale de manière à définir un épaulement s'étendant autour de ladite première extrémité, l'épaulement présentant des dimensions supérieures aux dimensions des ouvertures de la première plateforme et étant en contact avec la surface de la première plateforme.

Selon une première caractéristique du secteur de l'invention, la partie de la deuxième extrémité de chaque pale s'étendant au-delà de la deuxième plateforme comporte au moins une lumière ou encoche dans laquelle est placé un élément de verrouillage.

Selon une deuxième caractéristique du secteur de l'invention, la partie de la première extrémité de chaque pale s'étendant au-delà de la première plateforme comporte au moins une lumière ou encoche dans laquelle est placé un élément de verrouillage.

Selon une troisième caractéristique du secteur de l'invention, les pales, la première plateforme et la deuxième plateforme sont en matériau composite à matrice céramique (CMC).

Selon une quatrième caractéristique du secteur de l'invention, la première plateforme correspond à la plateforme interne du secteur de stator et en ce que la première extrémité du corps de pale correspond à l'extrémité interne dudit corps de pale, la deuxième plateforme correspondant à la plateforme externe dudit secteur de stator et la deuxième extrémité du corps de pale correspondant à l'extrémité externe dudit corps de pale.

La présente invention a encore pour objets :
- un stator de turbomachine comprenant une pluralité de secteurs selon l'invention,
- un compresseur de turbomachine équipé d'un stator selon l'invention, et
- une turbomachine équipée d'un compresseur selon l'invention.

### Brève description des dessins

L'invention sera mieux comprise à la description faite ci-après, à titre indicatif mais non limitatif, en référence aux dessins annexés sur lesquels :
- les figures 1A et 1B sont des vues en perspective d'un secteur de stator de turbomachine conformément à un mode de réalisation de l'invention ;
- la figure 2 illustre de façon très schématique la réalisation d'une ébauche fibreuse tissée multicouche destinée à la réalisation d'une pale du secteur de stator des figures 1A et 1B ;
- la figure 3 illustre la réalisation, à partir de l'ébauche fibreuse de la figure 2, d'une préforme fibreuse pour une pale de secteur de stator telle qu'illustrée sur les figures 1A et 1B ;
- la figure 4 est une vue en perspective d'une pale en matériau composite du secteur de stator des figures 1A et 1B obtenue à partir de la préforme fibreuse de la figure 3 ;
- la figure 5 illustre de façon très schématique la réalisation d'une ébauche fibreuse tissée multicouche destinée à la réalisation d'une plateforme interne du secteur de stator des figures 1A et 1B ;
- la figure 6 illustre la réalisation, à partir de l'ébauche fibreuse de la figure 5, d'une préforme fibreuse pour une plateforme interne de secteur de stator telle qu'illustrée sur les figures 1A et 1B ;
- la figure 7 est une vue en perspective de la plateforme interne en matériau composite du secteur de stator des figures 1A et 1B obtenue à partir de la préforme fibreuse de la figure 6 ;
- la figure 8 est une vue en perspective de la plateforme externe en matériau composite du secteur de stator des figures 1A et 1B ;
- la figure 9 est une vue en perspective montrant l'assemblage entre la plateforme externe et les pales lors de la réalisation du secteur de stator des figures 1A et 1B ;
- la figure 10 est une vue en perspective montrant l'assemblage entre la plateforme interne et les pales lors de la réalisation du secteur de stator des figures 1A et 1B ;
- la figure 11 est une vue de dessous montrant les jeux présents entre les extrémités internes des pales et les ouvertures de la plateforme interne ;
- la figure 12 est une vue en coupe selon le repère XII-XII de la figure 11 montrant les jeux présents entre les extrémités internes des pales et les ouvertures de la plateforme interne ;
- la figure 13 est une vue en perspective d'un stator de turbomachine formé par la réunion d'une pluralité de secteurs de stator des figures 1A et 1B ;

### Description détaillée de modes de réalisation

L'invention est applicable à différents types de stators de turbines à gaz, notamment des distributeurs basse pression ou redresseurs de turbomachine.

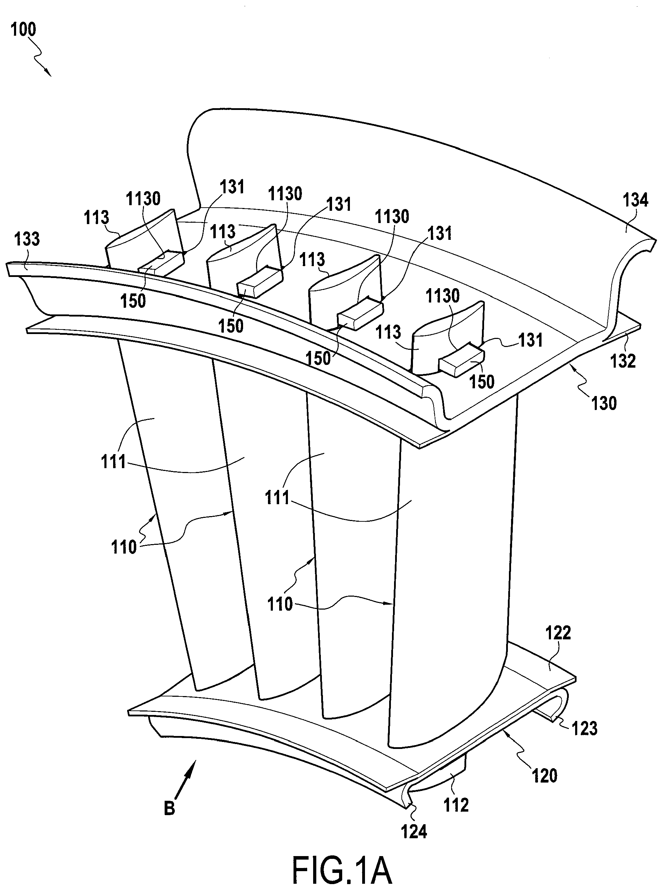

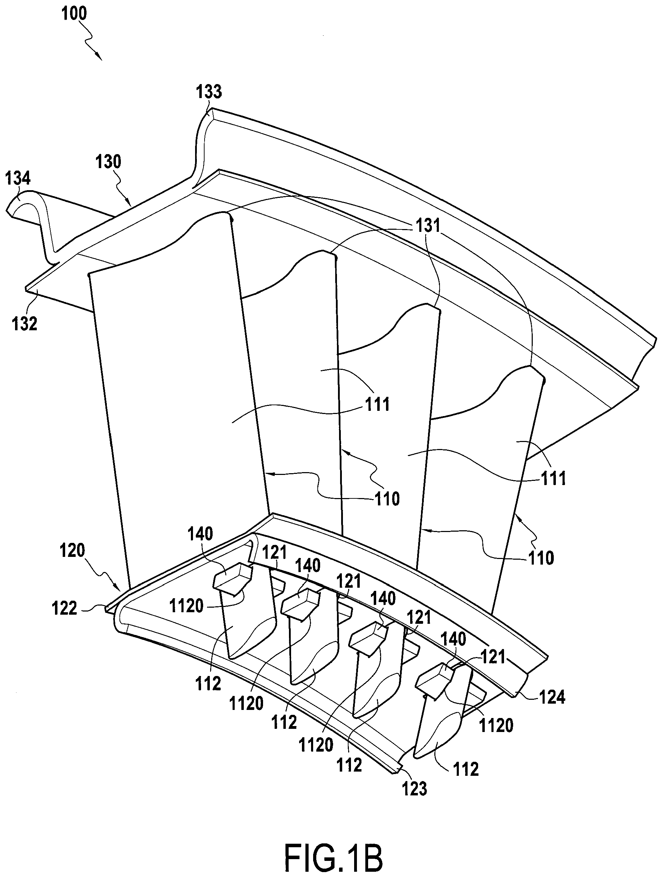

Les figures 1A et 1B montrent un secteur de stator 100 conformément à un mode de réalisation et correspondant à une partie d'un distributeur basse pression de turbomachine. Le stator 100 comprend ici quatre pales 110, une plateforme interne 120 et une plateforme externe 130, les plateformes interne et externe 120, 130 présentant une forme en arc de cercle.

Dans tout le texte, on désigne par "plateforme externe" ou "plateforme interne", aussi bien une plate-forme bi-fonctionnelle ayant une partie formant plateforme de constitution de veine et une partie formant pattes d'accrochage ou crochets ou becquets, qu'une plateforme monofonctionnelle limitée à l'une de ces parties.

Par "plateforme de constitution de veine" on désigne un élément formant partie d'une paroi extérieure ou intérieure délimitant la veine de circulation de gaz dans une turbine au niveau d'un distributeur de turbine ou la veine de circulation d'air dans un compresseur au niveau d'un redresseur de compresseur.

Dans tout le présent texte, les termes "interne" et "externe" sont utilisés en référence à la position ou orientation par rapport à l'axe de la turbine.

La plateforme externe 130 comprend une plateforme de constitution de veine 132. Du côté extérieur font saillie à partir de la plateforme de constitution de veine 132 une patte d'accrochage amont 133 et une patte d'accrochage aval 134 sous forme de secteurs annulaires à section sensiblement en forme de S. Les pattes d'accrochage 133, 134 s'étendent sur le même angle que la plateforme 132. Les parties terminales des pattes 133, 134 sont orientées respectivement vers l'amont et vers l'aval et sont destinées à être engagées dans des crochets portés par un carter de moteur aéronautique (non représenté sur les figures 1A et 1B) de façon similaire à un distributeur de turbine métallique.

Dans tout le texte, les termes "amont" et "aval" sont utilisés en référence au sens d'écoulement de flux gazeux dans la turbomachine.

La plateforme externe 120 comprend une plateforme de constitution de veine 122. Du côté intérieur, font saillie sous la plateforme interne 120 des crochets amont 123 et aval 124 qui sont sous forme de secteurs annulaires à section sensiblement en forme de C, et sont repliés respectivement vers l'aval et vers l'amont.

Les crochets 123 et 124 sont destinés à supporter et maintenir en position axiale un système d'étanchéité pour le disque mobile adjacent dans le moteur (non représenté sur les figures 1A et 1B).

Chaque pale comporte un corps de pale 111 qui s'étend entre une extrémité interne 112 et une extrémité externe 113. La plateforme interne 120 comporte des ouvertures 121 dans lesquelles sont engagées les extrémités internes 112 des pales 110 tandis que la plateforme externe 130 comporte des ouvertures 131 dans lesquelles sont engagées les extrémités externes 113 des pales 110. La plateforme interne 120 est solidarisée aux extrémités internes 112 des pales 110 par une liaison de type tenon/mortaise réalisée par des éléments ou clés de verrouillage 140 chacun introduits dans une lumière ou encoche 1120 ménagée dans la partie des extrémités internes 112 située au-delà de la plateforme interne 120 (figure 1B). La plateforme externe 130 est solidarisée aux extrémités externes 113 des pales 110 par une liaison de type tenon/mortaise réalisée par des éléments ou clés de verrouillage 150 chacun introduits dans une lumière ou encoche 1130 ménagée dans la partie des extrémités externes 113 située au-delà de la plateforme interne 120 (figure 1A).

Conformément à l'invention, les pales 110, la plateforme interne 120, la plateforme externe 130 et les éléments de verrouillage 140 et 150 sont chacun réalisés indépendamment les uns des autres.

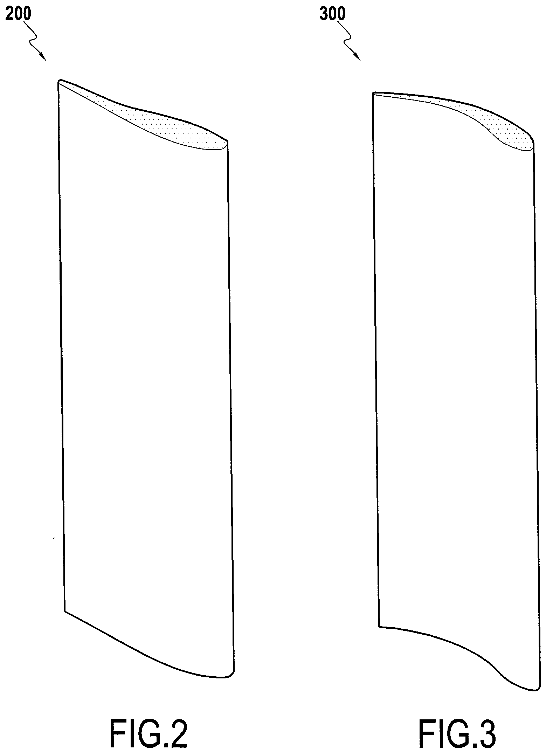

La figure 2 montre très schématiquement une ébauche fibreuse 200 à partir de laquelle une préforme fibreuse de pale peut être mise en forme afin, après densification par une matrice et usinage, d'obtenir une pale en matériau composite telle que les pales 110 illustrées par les figures 1A et 1B.

L'ébauche 200 est ici obtenue par tissage tridimensionnel ou tissage multicouches entre une pluralité de fils de chaîne et de trame. L'ébauche fibreuse 200 est destinée, après mise en forme, à constituer une préforme de pale. L'ébauche 200 peut présenter une épaisseur variable déterminée en fonction de l'épaisseur de profil de la pale à réaliser.

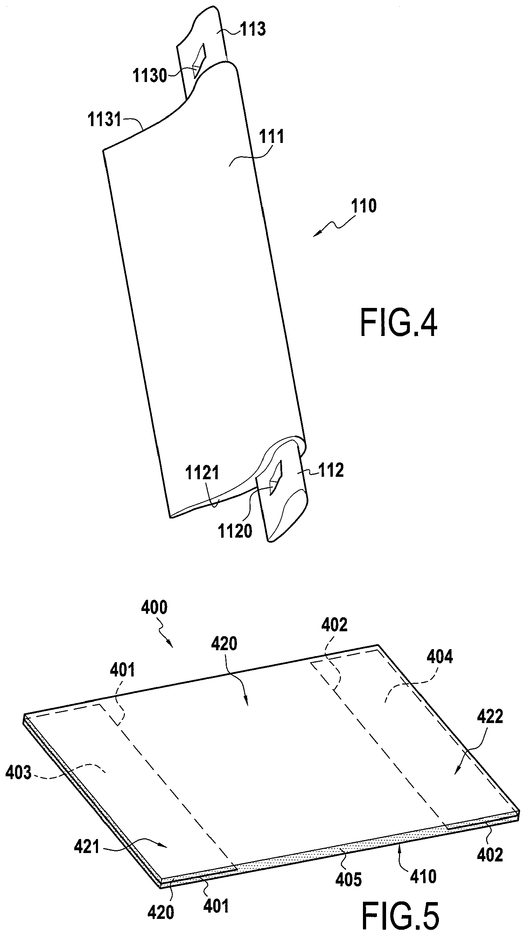

Une préforme fibreuse 300 de la pale à fabriquer est ensuite obtenue par moulage avec déformation de l'ébauche 200 pour reproduire le profil incurvé de la pale, comme le montre la figure 3. Après une première densification permettant d'obtenir une préforme apte à conserver sa mise en forme, la préforme 300 est usinée afin de former une partie de préforme de corps de pale, une partie de préforme d'extrémité interne de pale présentant des dimensions inférieures à celles de la partie de préforme de corps de pale et comportant une lumière ou encoche et une partie de préforme d'extrémité externe de pale présentant des dimensions inférieures à celles de la partie de préforme de corps de pale et comportant une lumière ou encoche. On obtient ainsi, comme illustrée sur la figure 4, une pale 110 comportant un corps de pale 111 s'étendant entre une extrémité interne 112 et une extrémité externe 113 comprenant chacune respectivement une lumière 1120, 1130. Si l'extrémité interne 112 a une forme similaire à celle du corps de pale 111, elle présente toutefois des dimensions inférieures à celles du corps de pale de manière à définir un épaulement 1121 qui s'étend tout autour de l'extrémité interne 112. De même, si l'extrémité externe 113 a une forme similaire à celle du corps de pale 111, elle présente toutefois des dimensions inférieures à celles du corps de pale de manière à définir un épaulement 1131 qui s'étend tout autour de l'extrémité interne 113.

Dans un exemple de réalisation, les fils utilisés peuvent être des fils de carbure de silicium (SiC) fournis sous la dénomination "Nicalon" par la société japonaise Nippon Carbon et ayant un titre (nombre de filaments) de 0,5K (500 filaments).

Bien entendu, selon les titres de fils disponibles, différentes combinaisons de nombres de couches de fils et de variations de contexture et de titre pourront être adoptées pour le profil à obtenir.

Pour le tissage de l'ébauche fibreuse 200, le tissage utilisé peut être par exemple un tissage multicouche réalisé avec une armure de type satin, ou multi-satin. D'autres types de tissage multicouche pourront être utilisés, par exemple un tissage multicouche à armure multi-toile ou un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

Différents modes de tissage multicouche sont notamment décrits dans le document WO 2006/136755 dont le contenu est incorporé ici par voie de référence.

L'ébauche fibreuse destinée à former le renfort fibreux de la pale peut être également obtenue à d'un empilement de plusieurs couches de :
- tissu unidimensionnel (UD),
- tissu bidimensionnel (2D),
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

Les couches sont liées entre elles par exemple par couture, par implantation de fils ou d'éléments rigides ou par aiguilletage.

La figure 5 montre très schématiquement une ébauche fibreuse 400 destinée à former le renfort fibreux de la plateforme interne et à partir de laquelle une préforme fibreuse de plateforme interne peut être mise en forme afin, après une première densification par une matrice permettant d'obtenir une préforme apte à conserver sa mise en forme, et usinage de ladite préforme densifiée, d'obtenir une plateforme interne 120 telle qu'illustré sur les figures 1A et 1B.

Dans l'exemple décrit ici, l'ébauche fibreuse 400 est obtenue, comme illustrée schématiquement sur la figure 5, par tissage multicouche entre une pluralité de couches de fils de chaîne et une pluralité de couches de trame. Le tissage multicouche réalisé peut être notamment un tissage à armure "interlock", c'est-à-dire une armure de tissage dans laquelle chaque couche de fils de trame lie plusieurs couches de fils de chaîne avec tous les fils d'une même colonne de trame ayant le même mouvement dans le plan de l'armure.

L'ébauche 400 comprend une première et une deuxième portions 410 et 420 destinées à former respectivement la plateforme de constitution de veine 122 et les crochets 123 et 124. Lors du tissage, une première et une deuxième déliaisons 401 et 402 sont réalisées à l'intérieur de l'ébauche fibreuse entre deux couches successives de fils de chaîne situées à la frontière entre les portions 410 et 420 et sur respectivement deux zones de déliaison 403 et 404. Les portions 410 et 420 sont liées entre elles au niveau d'une zone de liaison 405 située entre les deux zones de déliaison 403 et 404. Les déliaisons 401 et 402 permettent de former respectivement deux parties 421 et 422 qui peuvent être repliées lors de la mise en forme de l'ébauche afin de former au final les crochets 123 et 124.

L'ébauche fibreuse destinée à former la plateforme interne peut être également obtenue par assemblage de deux textures fibreuses correspondant respectivement aux première et deuxième portions 410 et 420 de l'ébauche fibreuse 400 décrite ci-avant. Dans ce cas, les deux textures fibreuses sont liées entre elles, par exemple par couture ou aiguilletage, seulement au niveau de la zone de liaison 405 de manière à former les deux parties 421 et 422 qui peuvent être repliées lors de la mise en forme de l'ébauche afin de former au final les crochets 123 et 124. Les deux textures fibreuses correspondant respectivement aux première et deuxième portions 410 et 420 peuvent être notamment chacune obtenue à partir d'une couche ou d'un empilement de plusieurs couches de :
- tissu unidimensionnel (UD),
- tissu bidimensionnel (2D),
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

Dans le cas d'un empilement de plusieurs couches, celles-ci sont liées entre elles par exemple par couture, par implantation de fils ou d'éléments rigides ou par aiguilletage.

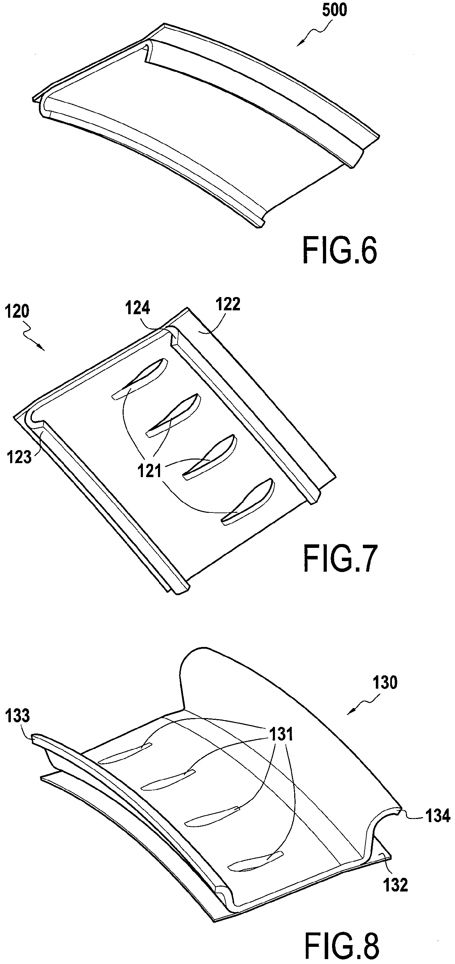

La figure 6 montre très schématiquement une préforme fibreuse 500 de la plateforme interne à fabriquer ensuite obtenue par moulage avec déformation de l'ensemble de la préforme pour obtenir une forme générale en arc de cercle, déformation de la portion 410 pour reproduire des formes semblables à celles du plateau de reconstitution de la veine interne et pliage des parties 421 et 422 de la portion 420 pour reproduire des formes semblables à celles des portions de fixation du crochet.

Après une première densification, la préforme 500 est usinée afin de former une ouverture ayant une forme et des dimensions équivalentes à celles de la plateforme interne à fabriquer.

On obtient ainsi, comme illustrée sur la figure 7, une plateforme interne 120 en forme d'arc de cercle comportant une plateforme de constitution de veine 122, des crochets 123, 124 et des ouvertures 121 présentant une forme équivalente à la forme de l'extrémité interne 112 des pales 110 mais ayant des dimensions supérieures à l'extrémité interne 112 comme expliqué ci-après.

La plateforme externe 130 représentée sur la figure 8 est obtenue de la même manière que celle déjà décrite ci-avant pour réaliser la plateforme interne 120. Les étapes de fabrications de la plateforme externe ne seront donc pas décrites à nouveau par souci de simplification. La plateforme externe 130 ainsi obtenue présente une forme d'arc de cercle et comporte une plateforme de constitution de veine 132, des pattes d'accrochage 133, 134 et des ouverture 131 présentant une forme équivalente à la forme de l'extrémité externe 113 des pales 110 mais ayant des dimensions supérieures à l'extrémité externe 113 comme expliqué ci-après.

Afin d'éviter l'introduction de coefficients de dilatation thermique différentiels entre les pales et les plateformes, ces éléments sont de préférence réalisés avec des fibres et une matrice de même nature.

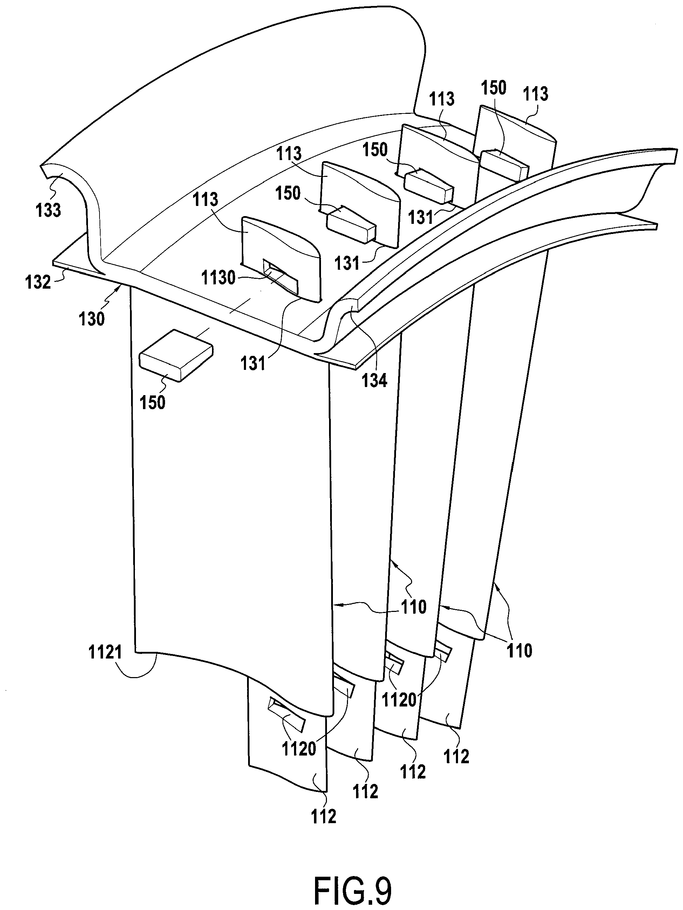

On décrit maintenant la réalisation d'un secteur de stator par assemblage des pièces fabriquées précédemment. Comme illustré sur la figure 9, on commence par assembler les pales 110 avec la plateforme externe 130. A cet effet, les extrémités externes 113 des pales 110 sont engagées dans les ouvertures 131 de la plateforme externe 130. Un élément de verrouillage 150, réalisé de préférence dans le même matériau composite que la pale et la plateforme, est introduit et collé dans chaque lumière 1130 d'extrémité externe 113 présente au-dessus de la plateforme externe 130 de manière à solidariser l'assemblage entre la plateforme externe 130 et les pales 110.

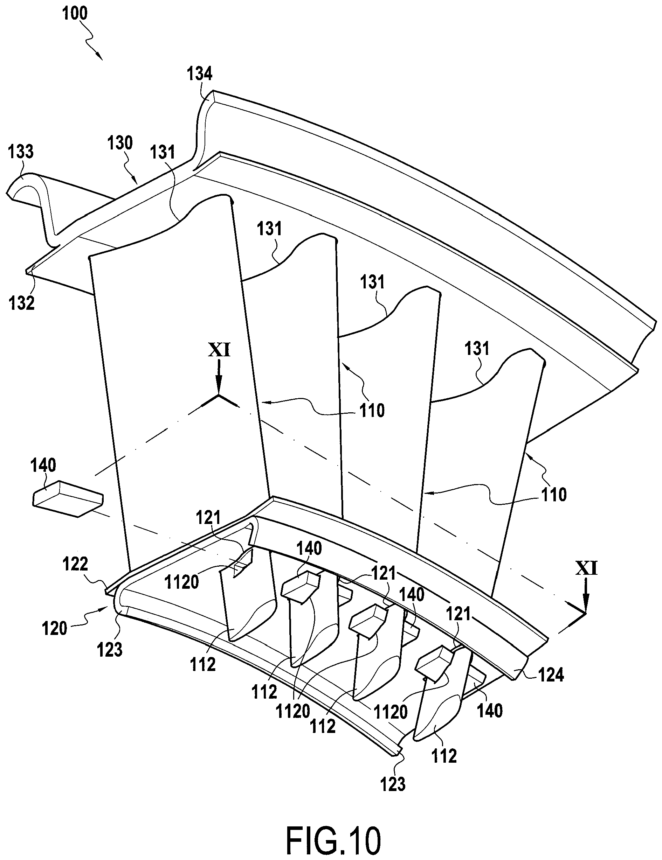

La plateforme interne 120 est ensuite assemblée avec les pales 110 en engageant les extrémités internes 112 de ces dernières dans les ouvertures 121 de la plateforme interne 120 comme illustré sur la figure 10. Un élément de verrouillage 140, réalisé de préférence dans le même matériau composite que la pale et la plateforme, est introduit et collé dans chaque lumière 1120 d'extrémité externe 112 présente au-dessus de la plateforme interne 120 de manière à solidariser l'assemblage entre la plateforme interne 120 et les pales 110.

L'ensemble est ensuite soumis à une deuxième densification permettant de créer des liaisons entre les pièces au niveau des interfaces d'assemblage par co-densification.

L'assemblage entre les pales 110 et la plateforme interne 120 n'est possible que grâce à la présence d'un jeu entre les extrémités internes 112 des pales 110 et les ouvertures 121 de la plateforme interne. En effet, afin de respecter la forme circulaire du stator final, le secteur de stator à réaliser doit correspondre à une portion de cercle dont le rayon de courbure est défini par les plateformes interne et externe. Dans ce cas, les pales 110 sont disposées de façon radiale entre les plateformes interne et externe et l'accostage d'une des deux plateformes avec les pales ne peut pas se faire selon la normale à l'axe des pales. Dans le mode de réalisation décrit ici, c'est la plateforme externe 130 qui est accostée en premier avec les pales 110. L'accostage peut donc être réalisé selon la normale à l'axe des pales de sorte qu'il n'est pas nécessaire d'avoir un jeu entre les extrémités externes 113 des pales et les ouvertures 131 de la plateforme externe 130. En revanche, une fois les pales 110 assemblées et solidarisées à la plateforme externe 130 présentant une forme en arc de cercle, il n'est pas possible d'engager les extrémités internes 112 des pales dans les ouvertures 121 de la plateforme interne 120 si aucun jeu n'est ménagé dans le sens de l'accostage entre ces ouvertures et les extrémités internes des pales.

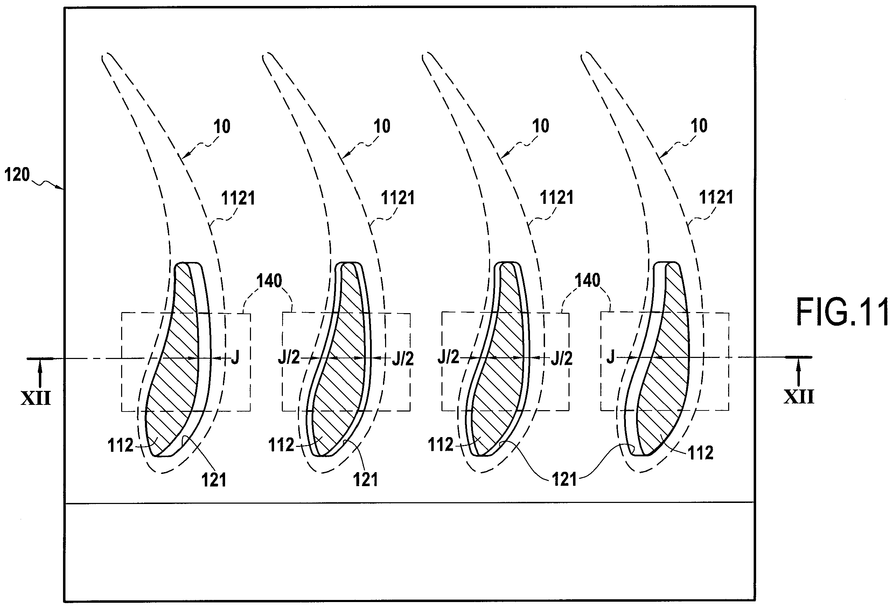

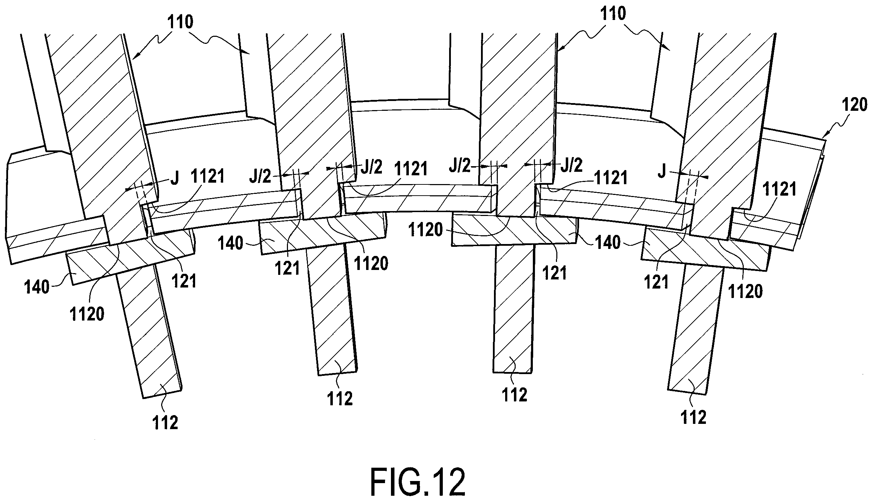

Comme illustré sur les figures 11 et 12, puisque les ouvertures 121 présentent des dimensions supérieures à celles des ouvertures 121, un jeu J est présent entre les extrémités internes 112 et les ouvertures 121 dans le sens de l'accostage entre ces éléments. Ce jeu J se répartit en fonction de la position de la pale à accoster avec la plateforme interne. Le jeu J est réparti des deux côtés de l'extrémité interne 112 des pales 110 situées au centre de la plateforme interne 120 tandis qu'il est principalement situé d'un seul côté de l'extrémité interne 112 des pales situées aux extrémités de la plateforme interne 120.

Le jeu J ainsi présent entre les extrémités internes 112 des pales 110 et les ouvertures 121 de la plateforme interne 120 permet d'assembler cette dernière avec toutes les pales déjà assemblées et solidarisées avec la plateforme externe.

En outre, afin de maintenir une étanchéité entre les pales et la plateforme interne en présence d'un tel jeu et éviter une perte de charge, les pales 110 comportent chacune un épaulement 1121 qui s'étend tout autour de l'extrémité interne 112 et qui présente des dimensions supérieures à celles des ouvertures 121 de la plateforme interne 120. Ainsi, après accostage et solidarisation de la plateforme interne 112 avec les pales 110, l'épaulement 1121 est en contact avec la surface supérieure 112a de la plateforme 112, ce qui permet d'isoler de la veine les espaces présents entre les extrémités internes 112 et les ouvertures 121 (figures 11 et 12).

Le secteur de stator 100 est de préférence réalisé en matériau composite à matrice céramique (CMC), c'est-à-dire des pièces formées d'un renfort en fibres réfractaires (carbone ou céramique) densifié par une matrice au moins partiellement céramique. Des exemples de matériaux CMC sont les composites C/SiC (renfort en fibres de carbone et matrice en carbure de silicium), les composites C/C-SiC (renfort en fibres de carbone et matrice comprenant une phase carbone, généralement au plus près des fibres, et une phase carbure de silicium), les composites SiC/SiC (fibres de renfort et matrice en carbure de silicium) et les composites oxyde/oxyde (fibres de renfort et matrice en alumine). Une couche d'interphase peut être interposée entre les fibres de renfort et la matrice pour améliorer la tenue mécanique du matériau.

La densification de la préforme fibreuse destinée à former le renfort fibreux de chaque pièce à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou encore suivant un enchaînement de ces deux procédés.

Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de la pièce finale. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

La densification de la préforme fibreuse peut-être également réalisée, de façon connue, par voie gazeuse par infiltration chimique en phase vapeur de la matrice (CVI). La préforme fibreuse correspondant au renfort fibreux de la pièce à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au coeur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Déposition") qui conduisent exclusivement à un dépôt à la surface du matériau.

La formation d'une matrice SiC peut être obtenue avec du méthyltrichlorosilane (MTS) donnant du SiC par décomposition du MTS.

Une densification combinant voie liquide et voie gazeuse peut être également utilisée pour faciliter la mise en oeuvre, limiter les coûts et les cycles de fabrication tout en obtenant des caractéristiques satisfaisantes pour l'utilisation envisagée.

La première densification réalisée individuellement sur chaque préforme fibreuse de pale, de plateforme interne, de plateforme externe et des éléments de verrouillage peut être réalisée par voie liquide, voie gazeuse, ou une combinaison de ces deux voies.

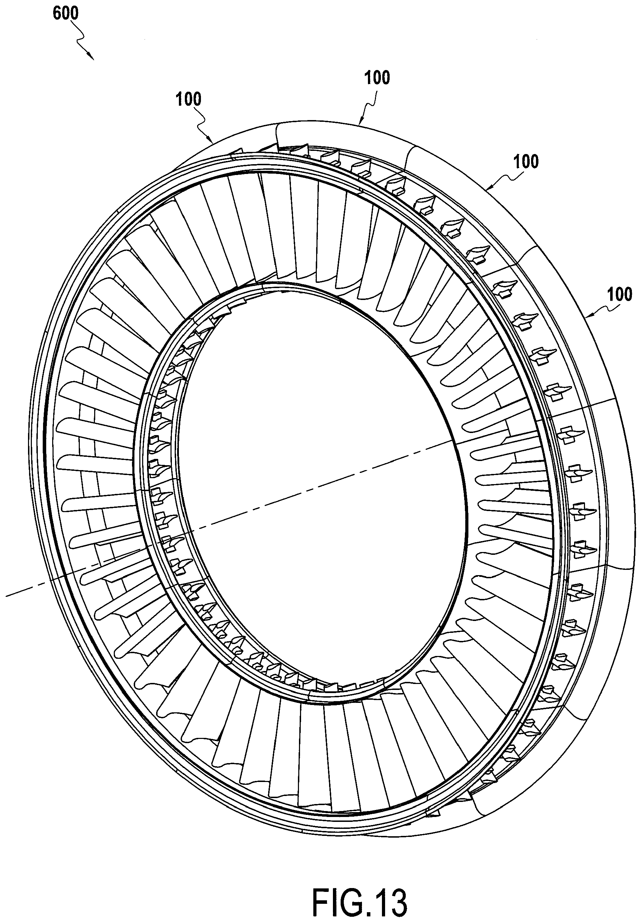

La figure 13 montre un stator 600 réalisé par la réunion d'une pluralité de secteurs de stator 100 décrits précédemment, le stator 600 étant apte à constituer un distributeur basse pression pour une turbine de moteur aéronautique.

Dans le secteur de stator 100 décrit ci-avant, un jeu a été ménagé entre les extrémités internes et les ouvertures de la plateforme interne de manière à permettre, lors de la réalisation du secteur de stator, l'assemblage des pales avec la plateforme interne à la suite de l'assemblage de ces dernières avec la plateforme externe. Toutefois, l'invention n'est pas limitée à cet ordre d'assemblage. Le secteur de stator de l'invention peut tout à fait être réalisé en assemblant d'abord les pales avec la plateforme interne puis avec la plateforme externe. Dans ce cas, les ouvertures de la plateforme externe destinées à recevoir les extrémités externes des pales présentent des dimensions supérieures aux extrémités externes des pales de manière à ménager un jeu entre les ouvertures et les extrémités externes et permettre ainsi l'assemblage entre la plateforme externe avec les pales déjà assemblées et solidarisées à la plateforme interne.

## Revendications

1. Procédé de fabrication d'un secteur (100) de stator (600) de turbomachine comprenant :
- la réalisation d'une pluralité d'ébauches fibreuses de pale (200) en une seule pièce,
- la mise en forme des ébauches fibreuses (200) pour obtenir des préformes fibreuses de pale (300) en une seule pièce,
- la densification des préformes de pale (300) par une matrice pour obtenir des pales (110) en matériau composite ayant chacune un renfort fibreux constitué par la préforme et densifié par la matrice, **caractérisé en ce que** il comprend:
- l'usinage de chaque pale (110) pour former une première extrémité (112) et une deuxième extrémité (113) délimitant entre elles un corps de pale (111), chaque première extrémité (112) présentant des dimensions inférieures à celles du corps de pale (11) de manière à définir un épaulement (1121) s'étendant autour de la première extrémité (112),
- la réalisation d'une lumière ou encoche (1120 ; 1130) dans les première et deuxième extrémités (112, 113) des pales (110),
- la réalisation d'une ébauche fibreuse d'une première plateforme (400) et d'une ébauche fibreuse d'une deuxième plateforme,
- la mise en forme des ébauches fibreuses pour obtenir une préforme fibreuse de première plateforme (500) en une seule pièce en forme d'arc de cercle et une préforme fibreuse de deuxième plateforme en une seule pièce en forme d'arc de cercle,
- la densification des préformes des première et deuxième plateformes par une matrice pour obtenir des première et deuxième plateformes (120, 130) en matériau composite en forme d'arc de cercle ayant un renfort fibreux constitué par la préforme et densifié par la matrice,
- la réalisation d'ouvertures (121, 131) dans les première et deuxième plateformes (120, 130), les ouvertures (121) de la première plateforme (120) présentant des dimensions supérieures aux dimensions des premières extrémités (112) des pales (110), l'épaulement (1121) s'étendant autour de la première extrémité (112) présentant des dimensions supérieures aux dimensions des ouvertures (121) de la première plateforme (120),
- engagement des deuxièmes extrémités (113) des pales (110) dans les ouvertures (131) de la deuxième plateforme (130),
- placement d'un élément de verrouillage (150) dans chaque lumière ou encoche (1130) des deuxièmes extrémités (113) des pales (110),
- engagement des premières extrémités (112) des pales (110) dans les ouvertures (121) de la première plateforme (120),
- placement d'un élément de verrouillage (140) dans chaque lumière ou encoche (1120) des premières extrémités (112) des pales (110).

2. Procédé selon la revendication 1, **caractérisé en ce que** les pales (110), la première plateforme (120), la deuxième plateforme (130) et les éléments de verrouillage (140, 150) sont réalisés en matériau composite à matrice céramique (CMC).

3. Secteur (100) de stator (600) de turbine comprenant une pluralité de pales (110) en matériau composite comprenant un renfort fibreux densifié par une matrice, chaque pale (110) comprenant un corps de pale (111) s'étendant entre une première extrémité (112) et une deuxième extrémité (113), ledit secteur comprenant en outre une première plateforme (120) et une deuxième plateforme (130) en forme d'arc de cercle en matériau composite comprenant un renfort fibreux densifié par une matrice, la première plateforme (120) comprenant des ouvertures (121) dans lesquelles sont engagées les premières extrémités (112) de pales (110) et la deuxième plateforme (130) comprenant des ouvertures (131) dans lesquelles sont engagées les deuxièmes extrémités (113) de pales (110),
**caractérisé en ce que** les ouvertures (121) de la première plateforme (120) présentent des dimensions supérieures aux dimensions des premières extrémités (112) des pales (110) engagées dans lesdites ouvertures (121) de manière à ménager un jeu (J) entre la première extrémité (112) de chaque pale (110) et l'ouverture (121) et **en ce que** chaque première extrémité (112) de pale engagée dans ladite ouverture (121) présente des dimensions inférieures aux dimensions du corps de pale (111) de manière à définir un épaulement (1121) s'étendant autour de ladite première extrémité (112), l'épaulement présentant des dimensions supérieures aux dimensions des ouvertures (121) de la première plateforme (120) et étant en contact avec la surface de la première plateforme (120).

4. Secteur selon la revendication 3, **caractérisé en ce que** la partie de la deuxième extrémité (113) de chaque pale (110) s'étendant au-delà de la deuxième plateforme (130) comporte au moins une lumière ou encoche (1130) dans laquelle est placé un élément de verrouillage (150).

5. Secteur selon la revendication 3 ou 4, **caractérisé en ce que** la partie de la première extrémité (112) de chaque pale (110) s'étendant au-delà de la première plateforme (120) comporte au moins une lumière ou encoche (1120) dans laquelle est placé un élément de verrouillage (140).

6. Secteur selon l'une quelconque des revendications 3 à 5, **caractérisé en ce que** les pales (110), la première plateforme (120) et la deuxième plateforme (130) sont en matériau composite à matrice céramique (CMC).

7. Secteur selon l'une quelconque des revendications 3 à 6, **caractérisé en ce que** la première plateforme (120) correspond à la plateforme interne du secteur (100) de stator et **en ce que** la première extrémité (112) du corps de pale (111) correspond à l'extrémité interne dudit corps de pale, la deuxième plateforme (130) correspondant à la plateforme externe dudit secteur (100) de stator et la deuxième extrémité (113) du corps de pale (111) correspondant à l'extrémité externe dudit corps de pale.

8. Stator (600) de turbomachine comprenant une pluralité de secteurs (100) selon l'une quelconque des revendications 3 à 7.

9. Compresseur de turbomachine équipé d'un stator selon la revendication 8.

10. Turbomachine équipée d'un compresseur selon la revendication 9.

## Patentansprüche

1. Verfahren zur Herstellung eines Abschnitts (100) eines Stators (600) einer Turbomaschine, umfassend:
- Herstellen einer Vielzahl von faserstoffhaltigen Blattrohlingen (200) in einem Stück,
- Formen der Faserrohlinge (200), um faserstoffhaltige Blattvorformen (300) in einem Stück zu erhalten,
- Verdichten der Blattvorformen (300) durch eine Matrix, um Blätter (110) aus einem Verbundwerkstoff zu erhalten, die jeweils eine Faserverstärkung aufweisen, die aus der Vorform besteht und durch die Matrix verdichtet ist,
**dadurch gekennzeichnet, dass** es umfasst:
- Bearbeiten der einzelnen Blätter (110) zur Bildung eines ersten Endes (112) und eines zweiten Endes (113), zwischen denen ein Blattkörper (111) abgegrenzt ist, wobei jedes erste Ende (112) Abmessungen aufweist, die kleiner sind als die des Blattkörpers (11), sodass ein Absatz (1121) definiert wird, der sich um das erste Ende (112) herum erstreckt,
- Herstellen einer Aussparung oder einer Kerbe (1120; 1130) in den ersten und zweiten Enden (112, 113) der Blätter (110),
- Herstellen eines Faserrohlings einer ersten Plattform (400) und eines Faserrohlings einer zweiten Plattform,
- Formen der Faserrohlinge, um eine faserstoffhaltige Vorform der ersten Plattform (500) in einem einzigen kreisbogenförmigen Stück und eine faserstoffhaltige Vorform der zweiten Plattform in einem einzigen kreisbogenförmigen Stück zu erhalten,
- Verdichten der Vorformen der ersten und der zweiten Plattform durch eine Matrix, um erste und zweite Plattformen (120,130) aus Verbundmaterial in Kreisbogenform zu erhalten, die jeweils eine Faserverstärkung aufweisen, die aus der Vorform besteht und durch die Matrix verdichtet ist,
- Herstellen von Öffnungen (121, 131) in der ersten und der zweiten Plattform (120, 130), wobei die Öffnungen (121) der ersten Plattform (120) Abmessungen aufweisen, die größer sind als die der ersten Enden (112) der Blätter (110), wobei der Absatz (1121) sich um das erste Ende (112) herum erstreckt und Abmessungen aufweist, die größer sind als die der Öffnungen (121) der ersten Plattform (120),
- Einbringen der zweiten Enden (113) der Blätter (110) in die Öffnungen (131) der zweiten Plattform (130),
- Anordnen eines Verriegelungselementes (150) in jeder Aussparung oder Kerbe (1130) der zweiten Enden (113) der Blätter (110),
- Einbringen der ersten Enden (112) der Blätter (110) in die Öffnungen (121) der ersten Plattform (120),
- Anordnen eines Verriegelungselementes (140) in jeder Aussparung oder Kerbe (1120) der ersten Enden (112) der Blätter (110).

2. Verfahren gemäß Anspruch 1, **dadurch gekennzeichnet, dass** die Blätter (110), die erste Plattform (120), die zweite Plattform (130) und die Verriegelungselemente (140, 150) aus einem Verbundwerkstoff mit keramischer Matrix (CMC) bestehen.

3. Abschnitt (100) eines Stators (600) einer Turbine, umfassend eine Vielzahl von Blättern (110) aus Verbundmaterial, umfassend eine matrixverdichtete Faserverstärkung, wobei jedes Blatt (110) einen Blattkörper (111) umfasst, der sich zwischen einem ersten Ende (112) und einem zweiten Ende (113) erstreckt, wobei der Abschnitt ferner eine erste Plattform (120) und eine zweite Plattform (130) umfasst, die kreisbogenförmig sind und aus einem Verbundwerkstoff mit einer matrixverdichteten Faserverstärkung bestehen, wobei die erste Plattform (120) Öffnungen (121) umfasst, in die die ersten Enden (112) der Blätter (110) eingreifen, und die zweite Plattform (130) Öffnungen (131) umfasst, in die die zweiten Enden (113) der Blätter (110) eingreifen,
**dadurch gekennzeichnet,**
**dass** die Öffnungen (121) der ersten Plattform (120) Abmessungen aufweisen, die größer sind als die der ersten Enden (112) der Blätter (110), die in diese Öffnungen (121) eingreifen, sodass ein Spiel (J) zwischen dem ersten Ende (112) jedes Blatts (110) und der Öffnung (121) ausgebildet ist, und dadurch, dass jedes in die erste Öffnung (121) eingreifende erste Ende (112) eines Blatts Abmessungen aufweist, die geringer sind als die des Blattkörpers (111), sodass ein Absatz (1121) definiert wird, der sich um das erste Ende (112) herum erstreckt, wobei der Absatz Abmessungen aufweist, die größer sind als die der Öffnungen (121) der ersten Plattform (120), und in Kontakt mit der Oberfläche der ersten Plattform (120) steht.

4. Abschnitt gemäß Anspruch 3, **dadurch gekennzeichnet, dass** der Teil des zweiten Endes (113) jedes Blattes (110), der sich über die zweite Plattform (130) hinaus erstreckt, mindestens eine Aussparung oder Kerbe (1130) aufweist, in der ein Verriegelungselement (150) angeordnet ist.

5. Abschnitt gemäß Anspruch 3 oder 4, **dadurch gekennzeichnet, dass** der Teil des ersten Endes (112) jedes Blattes (110), der sich über die erste Plattform (120) hinaus erstreckt, mindestens eine Aussparung oder Kerbe (1120) aufweist, in der ein Verriegelungselement (140) angeordnet ist.

6. Abschnitt gemäß einem der Ansprüche 3 bis 5, **dadurch gekennzeichnet, dass** die Blätter (110), die erste Plattform (120) und die zweite Plattform (130) aus einem Verbundwerkstoff mit keramischer Matrix (CMC) bestehen.

7. Abschnitt gemäß einem der Ansprüche 3 bis 6, **dadurch gekennzeichnet, dass** die erste Plattform (120) mit der internen Plattform des Abschnitts (100) des Stators übereinstimmt, und dadurch, dass das erste Ende (112) des Blattkörpers (111) mit dem internen Ende dieses Blattkörpers übereinstimmt, wobei die zweite Plattform (130) mit der externen Plattform dieses Abschnitts (100) des Stators übereinstimmt und das zweite Ende (113) des Blattkörpers (111) mit dem externen Ende dieses Blattkörpers übereinstimmt.

8. Stator (600) für eine Turbomaschine, umfassend eine Vielzahl von Abschnitten (100) gemäß einem der Ansprüche 3 bis 7.

9. Verdichter für eine Turbomaschine, ausgestattet mit einem Stator gemäß Anspruch 8.

10. Turbomaschine, ausgestattet mit einem Verdichter nach Anspruch 9.

## Claims

1. A method of fabricating a sector (100) of a turbine engine stator (600), the method comprising:
• making a plurality of single-piece vane fiber blanks (200);
• shaping the fiber blanks (200) in order to obtain single-piece vane fiber preforms (300);
• densifying the vane preforms (300) with a matrix in order to obtain composite material vanes (110), each comprising fiber reinforcement constituted by the preform and densified by the matrix;
**characterized in that** it comprises:
• machining each vane (110) to form a first end (112) and a second end (113) defining between them an airfoil (111), each first end (112) having dimensions smaller than the dimensions of the airfoil (11) so as to define a shoulder (1121) extending around the first end (112);
• making respective slots or notches (1120; 1130) in the first and second ends (112, 113) of the vanes (110);
• making a fiber blank (400) for a first platform and a fiber blank for a second platform;
• shaping the fiber blanks to obtain a single-piece fiber preform (500) for the first platform in the form of a circular arc and a single-piece fiber preform for the second platform in the form of a circular arc;
• densifying the preforms for the first and second platforms with a matrix in order to obtain first and second platforms (120, 130) made of composite material and in the form of circular arcs comprising fiber reinforcement constituted by the preform and densified by the matrix;
• making openings (121, 131) in the first and second platforms (120, 130), the openings (121) of the first platform (120) presenting dimensions greater than the dimensions of the first ends (112) of the vanes (110), the shoulder (1121) extending around each first end (112) presenting dimensions greater than the dimensions of the openings (121) in the first platform (120);
• engaging the second ends (113) of the vanes (110) in the openings (131) of the second platform (130);
• placing a locking element (150) in each slot or notch (1130) at the second ends (113) of the vanes (110);
• engaging the first ends (112) of the vanes (110) in the openings (121) of the first platform (120); and
• placing a locking element (140) in each slot or notch (1120) at the first ends (112) of the vanes (110).

2. A method according to claim 1, wherein the vanes (110), the first platform (120), the second platform (130), and the locking elements (140, 150) are made of ceramic matrix composite (CMC) material.

3. A sector (100) for a turbine stator (600), the sector comprising a plurality of vanes (110) of composite material comprising fiber reinforcement densified by a matrix, each vane (110) having an airfoil (111) extending between a first end (112) and a second end (113), said sector also comprising a first platform (120) and a second platform (130), the platforms being in the form of circular arcs of composite material comprising fiber reinforcement densified by a matrix, the first platform (120) having openings (121) in which the first ends (112) of the vanes (110) are engaged, and the second platform (130) having openings (131) in which the second ends (113) of the vanes (110) are engaged, the sector being **characterized in that** the openings (121) in the first platform (120) present dimensions that are greater than the dimensions of the first ends (112) of the vanes (110) engaged in said openings (121) so as to leave clearance (J) between the first ends (112) of each of the vanes (110) and the openings (121), and **in that** each vane first end (112) engaged in said opening (121) presents dimensions smaller than the dimensions of the airfoil (111) so as to define a shoulder (1121) extending around said first end (112), the shoulder presenting dimensions greater than the dimensions of the openings (121) of the first platform (120) and being in contact with the surface of the first platform (120).

4. A sector according to claim 3, **characterized in that** the portion of the second end (113) of each vane (110) extending beyond the second platform (130) includes at least one slot or notch (1130) in which a locking element (150) is placed.

5. A sector according to claim 3 or claim 4, **characterized in that** the portion of the first end (112) of each vane (110) extending beyond the first platform (120) includes at least one slot or notch (1120) in which a locking element (140) is placed.

6. A sector according to any one of claims 3 to 5, **characterized in that** the vanes (110), the first platform (120), and the second platform (130) are made of ceramic matrix composite (CMC) material.

7. A sector according to any one of claims 3 to 6, **characterized in that** the first platform (120) corresponds to the inner platform of the stator sector (100) and **in that** the first end (112) of the airfoil (111) corresponds to the inner end of said airfoil, the second platform (130) corresponding to the outer platform of said stator sector (100) and the second end (113) of the airfoil (111) corresponding to the outer end of said airfoil.

8. A turbine engine stator (600) having a plurality of sectors (100) according to any of claims 3 to 7.

9. A turbine engine compressor having a stator according to claim 8.

10. A turbine engine having a compressor according to claim 9.
